(19) Europäisches Patentamt
European Patent Office
Office européen des brevets

(11) **EP 4 335 639 B1**

(12) **EUROPEAN PATENT SPECIFICATION**

(45) Date of publication and mention
of the grant of the patent:
**16.07.2025 Bulletin 2025/29**

(21) Application number: **23195655.8**

(22) Date of filing: **06.09.2023**

(51) International Patent Classification (IPC):
*B32B 27/32* (2006.01)   *B32B 27/36* (2006.01)
*B32B 27/08* (2006.01)   *B32B 27/10* (2006.01)
*B32B 27/16* (2006.01)   *B32B 7/12* (2006.01)
*B32B 29/00* (2006.01)

(52) Cooperative Patent Classification (CPC):
**B32B 27/32; B32B 7/12; B32B 27/08; B32B 27/10;
B32B 27/16; B32B 27/36; B32B 29/005;**
B32B 2250/04; B32B 2255/10; B32B 2255/20;
B32B 2307/31; B32B 2307/516; B32B 2307/518;
B32B 2307/7244; B32B 2307/7265;          (Cont.)

(54) **LAMINATED PACKAGING MATERIAL COMPRISING A BARRIER LAYER AND PACKAGING CONTAINER MADE THEREFROM**

LAMINIERTES VERPACKUNGSMATERIAL MIT EINER BARRIERESCHICHT UND DARAUS HERGESTELLTER VERPACKUNGSBEHÄLTER

MATÉRIAU D'EMBALLAGE STRATIFIÉ COMPRENANT UNE COUCHE BARRIÈRE ET RÉCIPIENT D'EMBALLAGE FABRIQUÉ À PARTIR DE CELUI-CI

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **06.09.2022 EP 22194066**

(43) Date of publication of application:
**13.03.2024 Bulletin 2024/11**

(73) Proprietor: **Tetra Laval Holdings & Finance S.A.
1009 Pully (CH)**

(72) Inventors:
• **LORENZETTI, Cesare
2017 Boudry (CH)**

• **DENECKER, Céline
1680 Romont (CH)**

(74) Representative: **Tetra Pak - Patent Attorneys SE
AB Tetra Pak
Patent Department
Ruben Rausings gata
221 86 Lund (SE)**

(56) References cited:
**EP-A1- 2 451 641        EP-A1- 2 758 239
EP-A1- 3 517 291        EP-B1- 2 451 641
EP-B1- 2 758 239        DE-T2- 69 030 369**

(52) Cooperative Patent Classification (CPC): (Cont.)
B32B 2307/734; B32B 2439/70

**Description**

Technical Field

The present invention relates to a laminated packaging material.

Furthermore, the invention relates to a method of manufacturing of the laminated packaging material, to a packaging container comprising the laminated packaging material, and to a method of manufacturing the packaging container.

Background of the Invention

Packaging containers of the single use disposable type for liquid foods are often produced from a packaging laminate based on paperboard or carton. One such commonly occurring packaging container is marketed under the trademark Tetra Brik Aseptic® and is principally employed for aseptic packaging of liquid foods such as milk, fruit juices etc., sold for long term ambient storage. The packaging material in this known packaging container is typically a laminate comprising a bulk or core layer, of paper or paperboard, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also, on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipeds, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced in bacteria and the filled packaging container is produced under clean conditions such that the filled package may be stored for a long time even at ambient temperature, without the risk of growth of micro-organisms in the filled product. Another important advantage of the Tetra Brik®-type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil (also referred to as Alufoil) in the packaging laminate provides gas barrier properties quite superior to most polymeric gas barrier materials. The conventional aluminium foil based packaging laminate for liquid food aseptic packaging is still the most cost-efficient packaging material, at its level of performance, available on the market today.

Any other material to compete with the Alufoil-based materials must be cost-efficient regarding raw materials, have at least comparable food preserving properties and have a comparably good performance during converting into a finished packaging laminate.

In the efforts to develop non-aluminium-foil materials for liquid food carton packaging, it is desirable to develop pre-manufactured films or sheets having high and multiple barrier functionalities (i.e. not only oxygen and gas barrier properties, but also water vapour, chemical- and/or aroma-substance barrier properties) to replace the conventional aluminium foil barrier material, and to adapt such films or sheets to the conventional aluminium foil process for lamination and manufacturing. Such films or sheets may be coated with a barrier coating e.g. by vapour deposition coating.

Such barrier films usually have at least one drawback, when compared to the conventional aluminium foil, for use in liquid paperboard packaging of liquid food. One important drawback may be the high manufacturing costs of such a barrier film and/or the complexity in the manufacturing method thereof. Another drawback may be that it adds complexity in the lamination process when converting into a laminated packaging material, such that it is not possible to directly replace an aluminium foil.

One type of vapour deposition coating, often having some barrier properties, in particular water vapour barrier properties, is so-called metallisation coatings, e.g. aluminium metal physical vapour deposition (PVD) coatings.

Such a vapour deposited layer, substantially consisting of aluminium metal, may have a thickness of from 10-30 nm, which corresponds to less than 1 % of the aluminium metal material present in an aluminium foil of conventional thickness for packaging, i.e. 6,3 $\mu$m. While vapour deposition metal coatings require very little metal material, they provide a lower level of oxygen barrier properties, and may need to be combined with a further gas barrier material in order to provide a final laminated material with sufficient barrier properties. On the other hand, they may complement a further gas barrier layer, and provide good water vapour barrier properties. Pure aluminium coatings have a metallic appearance, which does not allow them to be differentiated visually from foil-based packaging material.

Other examples of vapour deposition coatings are aluminium oxide (AlOx, $Al_2O_3$) and silicon oxide (SiOx) coatings. Such coatings may be applied by means of PVD. Aluminium oxide (AlOx) coatings are transparent with good oxygen barrier properties. However, the coating is quite brittle. AlOx coatings are disclosed for example in WO2009/112255 of the applicant.

Other coatings may be applied by means of a plasma enhanced chemical vapour deposition method (PECVD), wherein a vapour of a compound is deposited onto the substrate under more or less oxidising circumstances. For example, silicon oxide coatings (SiOx) may alternatively be applied by a PECVD process.

EP437946 of Bowater Packaging Limited discloses a web material for making microwaveable pouches for packaging oxygen- and/or moisture-sensitive substances. The material comprises a web substrate with a coating comprising a uniform mixture of metal and metal oxide, the amount of metal being low so that the coated substrate is transparent to microwaves. The material is made by a reactive evaporation process in which a controlled amount of oxygen-containing gas is introduced into a stream of evaporating metal to deposit the mixture on the substrate. The material is formed into pouches. In the examples, the coating weight is about 0.1 g/m$^2$. For the product to be microwaveable, the maximum final optical density for the coating is stated to be 0.25, corresponding to a minimum transmittance of 56 %.

EP3517291 discloses laminated packaging materials comprising a bulk layer of cellulose-based material, and outer- and innermost liquid tight, heat-sealable thermoplastic polymer layers, further having a barrier layer laminated between the bulk layer and the innermost layer.

## Summary

According to a first aspect of the invention, there is provided a laminated packaging material for packaging of liquid or semi-liquid food products, comprising:

- a bulk layer comprising cellulose-based material, preferably paper or paperboard,

- a first outermost liquid-tight, heat-sealable thermoplastic layer, arranged on the outside of the bulk layer to constitute the outside of a package formed from the packaging material,

- a second innermost liquid-tight, heat-sealable thermoplastic layer arranged on the inside of the bulk layer to be in direct contact with the filled food product, and

- a barrier layer comprising a barrier substrate layer coated with a physical vapour deposited (PVD) barrier coating comprising partially oxidised aluminium, the barrier coating having a thickness of 8 to 40 nm and a transmittance of 20 to 60 %, the barrier layer being laminated between the bulk layer and the second, innermost liquid-tight, heat-sealable thermoplastic layer.

According to a second aspect, a method of manufacturing the laminated packaging material is provided a method of manufacturing the laminated packaging material described above, comprising the steps, in any order, of

- laminating the barrier layer to the inner side of the bulk layer,

- applying the first outermost liquid-tight, heat-sealable thermoplastic layer onto the outer side of the bulk layer, and applying the second innermost liquid-tight, heat-sealable thermoplastic layer on the inner side of the barrier layer.

According to a third aspect, there is provided a packaging container for liquid or semi-liquid food products, comprising the laminated packaging material described above.

According to a fourth aspect, there is provided a method of forming the packaging container described above, comprising a step of folding the laminated packaging material.

Detailed Description

The laminated packaging material of the invention comprises a barrier layer including a barrier substrate layer and a barrier coating of partially oxidised aluminium on the barrier substrate layer.

The barrier coating is applied by means of physical vapour deposition (PVD) with reactive evaporation onto the surface of the barrier substrate layer. The reactants are aluminium and oxygen, supplied to the PVD process at an appropriate ratio such that the aluminium is only partially oxidised. A PVD apparatus (also referred to herein as a plant) having a coating zone is used.

Aluminium is suitably supplied to the PVD process in the coating zone via wire feeding. However, other methods of supplying aluminium, such as in pans, may alternatively be possible. This has the advantage of reduced maintenance costs. This is called inductive evaporation. As a further alternative, an e-beam gun can be used to evaporate an aluminium slab contained in a cooled crucible. The high-energy bombardment heats up the aluminium source to the point where it melts and evaporates. Although e-beam evaporation is mostly used for ceramic coatings it can be used for metallization, but maintenance and capital investment is higher.

Oxygen is supplied as a gas to the PVD process in the coating zone. Suitably, oxygen is introduced via injection nozzles.

Suitably, plasma enhanced reactive evaporation of aluminium to be combined with oxygen is used. In the case of plasma enhanced reactive evaporation the use of a mixture of oxygen and a noble gas (e.g. argon) may help to stabilize the plasma discharge and/or improve the coating density.

The partially oxidised aluminium is between Al and $Al_2O_3$ in overall stoichiometry. Preferably, the partially oxidised aluminium comprises a ceramic-metallic (cer-met) composite of aluminium particles and $Al_2O_3$. The aluminium particles may be visible in TEM, as discussed in the example below.

Without wishing to be bound by theory, the inventors believe that growth of aluminium clusters to particles visible in TEM is influenced not only by the ratio of aluminium to oxygen in the reactive evaporation PVD process, but also by process parameters such as coating line speed (high coating line speed is expected to lead to smaller particles).

Moreover, conducting the reactive evaporation in the presence of a plasma (i.e. plasma-assisted reactive evaporation), is likely to influence the particle size growth by producing smaller particles.

Coating thicknesses are in the range of 8 (or 10) to 40 nm. Preferred coating thicknesses are above 15 nm and/or below 30 nm (more preferably below 25 nm). For low coating thicknesses, pinholes or other defects may be present which can lead to poor oxygen barrier properties. For high coating thicknesses, the coating may be brittle so that cracking occurs when the barrier layer is subjected to mechanical treatment such as extrusion coating or folding. Such cracking can also lead to poor oxygen barrier properties.

Where the barrier substrate layer is of polyolefin, however, a barrier coating thickness of no more than 15 nm is preferred. This is because polyolefins are soft polymers, so that barrier coatings formed on a polyolefin substrate layer are particularly liable to cracking.

Preferably, the barrier coating has a non-metallic appearance. The coatings are typically grey or brown. It was found that coatings with a final transmittance value of less than 20 % had a metallic appearance, and this is undesirable. Coatings with a higher transmittance value than 20 % did not have a metallic appearance after lamination, particularly when unbleached board was used as a bulk layer. Preferably, the transmittance of the barrier layer is 25 to 60 %, more preferably 30 to 60 %. Higher transmittance values than 60 % were associated with poor oxygen barrier properties.

The barrier substrate layer may comprise a polymer film or a cellulose-based material.

Typical thicknesses of the polymer film barrier substrate layer may be from 6 to 30 $\mu$m, such as from 8 to 20 $\mu$m, e.g. 12 $\mu$m.

The polymer film barrier substrate layer is preferably a pre-manufactured oriented film, such as a blown film or a cast-oriented film. Both types of pre-manufactured films are manufactured by extruding the molten composition into a sheet of film, which is subsequently stretched into a considerably thinner but stable film. This means that the film will not shrink or deteriorate due to changes of conditions in the environment around it, or due to ageing. The film may be oriented either mono-axially, i.e. in the machine direction, or biaxially in both the machine direction (MD) and the cross direction (CD).

The polymer film barrier substrate layer is preferably of polyester or polyolefin.

Polyethylene terephthalate (PET) is a preferred polyester. Mono-axially oriented PET (MOPET) and biaxially orientated PET (BOPET) are particularly preferred. Mitsubishi RNK 12.0 2 is an example of a suitable BOPET film of thickness 12 μm.

Polyethylene (PE, e.g. films comprising HDPE, MDPE and/or LLDPE, and optionally a minor amount of LDPE) and polypropylene (PP, e.g. BOPP) are preferred polyolefins.

Films are designed depending on their final application and their components (polymer grades) are chosen to fulfil certain requirements including mechanical performance, sealabilty, printability, coating reception, puncture resistance and/or tear strength.

A suitable film design might include at least 3 layers (possibly up to 5 layers), where one particular PE is provided in the core to guarantee stiffness and thermal stability, whereas other grades could be selected for providing an enhanced coating receiving layer or sealant.

Suitable film materials include the substrate polymer films discussed in WO2009/112255 at pages 17-19.

Where the barrier substrate layer comprises a cellulose-based material, it is preferably of paper, e.g. of the type described in WO2022/117462. Suitably, the paper is thin paper, e.g. 30-60 g/m2 (gsm), and it may be of high density, e.g. at least 900 kg/m3. Suitably, the paper is pre-coated, e.g. with starch and/or PVOH, to give a smooth surface.

Improved adhesion and gas barrier properties can be obtained partly by means of ion bombardment in a surface treatment process, in order to activate the surface before coating. Such surface activation treatments include corona, plasma, atmospheric plasma during film manufacturing and in-line plasma pre-treatment prior to the coating process. Such processes are discussed in US8048532B2, US10569515B2 and WO2020155795A1. Preferably, therefore, the surface of the barrier substrate layer to be PVD coated has been pre-treated by plasma and/or corona. Corona treatment is typically carried out during film manufacturing. For plasma pre-treatment, oxygen, nitrogen, argon and/or neon plasmas may be used; oxygen/argon and neon/argon are examples of suitable plasma mixtures. The plasma may be triggered either by alternating current or direct current. Pre-treatment is particularly important for polyolefin films.

It has also been seen that similar improvements may be obtainable by post-treating the barrier-coated substrate layer with plasma after the formation of the barrier coating. Post-treatment may be useful oxidising the surface of the coating and/or in removing aluminium hydroxides from the surface of the coating; such aluminium hydroxides can otherwise lead to poor adhesion to the adjacent layer. A post-treatment with nitrogen mixed into the plasma gas is suitable.

The film may thus be both pre-treated and post-treated to ensure as good results as possible, regarding OTR and adhesion. The pre-treatment and post-treatment may be the same or different. The barrier coated film may alternatively be only post-treated, with some similar improvements.

The pre- and post-treatments of the surfaces of the film substrate and the barrier coating, respectively, may be done in the same PVD apparatus as the barrier coating itself, by using a different (or the same) gas composition in a plasma pre-zone and/or a plasma post-zone. Each such zone suitably has a different pressure from the coating zone and is divided from the coating zone by proper arrangements. The plasma treatment may be performed by magnetron plasma or by inductively coupled plasma arrangements.

The surface treatments may alternatively take place in separate plasma chambers of the apparatus. They are very brief plasma treatments, acting on the surface for just a few milliseconds.

Although it is preferred that the barrier coating of the barrier layer is adjacent to the bulk layer, the barrier layer may be turned either way when laminated into the packaging material. The side of the barrier substrate layer that is not coated with a barrier coating may be laminated to a polyolefin layer via an interjacent bonding layer of a primer or adhesion-promoting layer to improve the bonding between the layers in the laminate.

The laminated packaging material further comprises a first outermost liquid-tight, heat-sealable polyolefin layer and a second innermost liquid-tight, heat-sealable polyolefin layer. Suitable thermoplastics for the outermost and innermost heat-sealable liquid-tight layers are polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE or mPE) and blends or copolymers thereof. According to a preferred embodiment, the outermost heat-sealable and liquid-tight layer is LDPE, while the innermost heat-sealable, liquid-tight layer is a blend composition of m-LLDPE and LDPE for optimal lamination and heat sealing properties.

The thickness of the innermost heat sealable layer may be from 15 to 45 g/m$^2$, such as from 25 to 35 g/m$^2$. The thickness of the outermost heat sealable layer may be from 10 to 20 g/m$^2$. Depending on the type of polymer used as sealant and the integrity requirements, the thickness will vary. In general mLLDPE allows up to 50% downgauging compared to LDPE.

The bulk layer of cellulose-based material is typically the thickest layer or the layer containing the most material in a multilayer laminate, i.e. the layer which contributes most to the mechanical properties and the dimensional stability of the laminate and of packaging containers folded from the laminate. Typically, the bulk layer comprises paper, paperboard or carton. Suitably the bulk layer has a bending force of 320 mN. The bulk layer may also be a layer providing a greater thickness distance in a sandwich structure, which further interacts with stabilising facing layers, which have a higher Young's modulus, on each side of the bulk layer, in order to achieve sufficient such mechanical properties and dimensional stability. The barrier substrate layer, especially if of paper, may be such a stabilising facing layer.

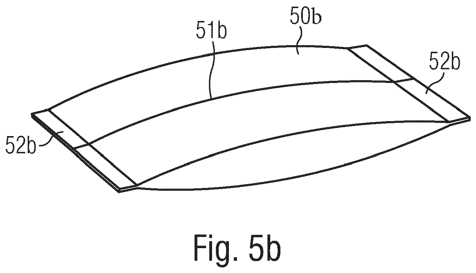

A paper or paperboard bulk layer for use in the invention usually has a thickness of from about 100 $\mu$m up to about 600 $\mu$m, and a surface weight of approximately 100-500 g/m$^2$, preferably about 200-300 g/m$^2$, and may be a conventional paper or paperboard of suitable packaging quality. For low-cost aseptic, long-term packaging of liquid food, a thinner packaging laminate may be used, having a thinner paper core layer. The packaging containers made from such packaging laminates are not fold-formed and are more similar to pillow-shaped flexible pouches, as explained further below in connection with Fig. 5b. A suitable paper for such pouch-packages usually has a surface weight of from about 50 to about 140 g/m$^2$, preferably from about 70 to about 120 g/m$^2$, more preferably from 70 to about 110 g/m$^2$.

The barrier layer may be bonded to the bulk layer by an intermediate adhesive, or thermoplastic polymer bonding layer, or so-called laminating layer, thus binding the barrier layer to the inner surface of the bulk layer (inner being the direction towards the interior of a packaging container made from the material). The bonding/laminating layer may be a polyolefin layer, or a layer of a polyethylene-based polyolefin copolymer or a polyethylene blend, including in the majority ethylene monomer units. Preferably, the bulk layer is bonded to the barrier layer by melt extrusion laminating the bonding polymer layer between a web of the bulk layer and a web of the barrier layer, and simultaneously pressing the three material layers together while they are forwarded through a lamination roller nip, thus providing a laminated structure, i.e. by extrusion laminating the bulk layer to the barrier layer.

The same thermoplastic polyolefin-based materials as listed for the outermost and innermost layers, and in particular polyethylenes, may be suitable in bonding layers interior of the laminated material, i.e. between a bulk layer, such as paper or paperboard, and the barrier layer. In an embodiment, the thermoplastic bonding layer may be a polyethylene layer, such as a low density polyethylene (LDPE) layer.

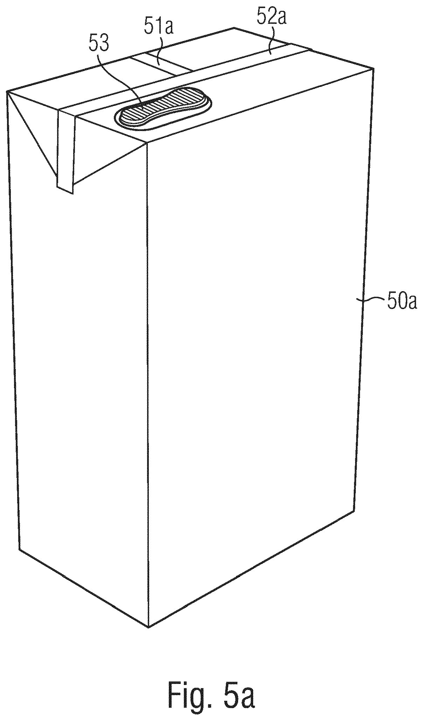

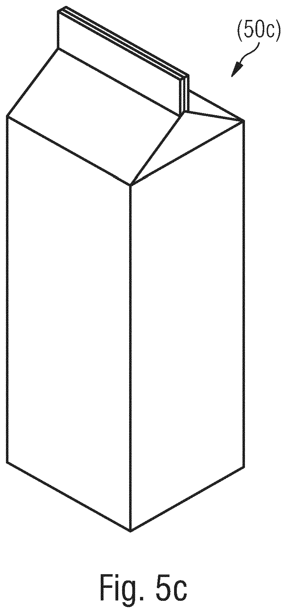

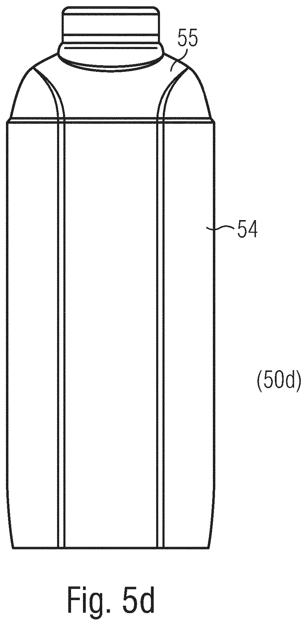

The packaging container is suitably of a type described below in connection with Fig. 5. Packaging containers may be manufactured from the laminated packaging material partly or entirely.

Folding of the laminated packaging material, and other steps in forming the packaging container, involves mechanical treatment of the barrier layer.

The packaging container may be formed from the laminated packaging material and partly sealed, filled with liquid or semi-liquid food and subsequently and finally completely sealed, by sealing of the packaging material to itself, optionally in combination with a plastic opening or top part of the package.

Preferably, the laminated packaging material has a oxygen transmission rate of below 5 cm$^3$/m$^2$/24 h/atm, more preferably below 2 cm$^3$/m$^2$/24 h/atm, particularly when BOPET is used as a barrier substrate layer.

<u>Definitions</u>

By the term "long-term storage", in connection with the present invention, is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

By the term "package integrity", is generally meant the package tightness, i.e. the resistance to leakage or breakage of a packaging container. More specifically, it defines the resistance of the package to intrusion of microbes, such as bacteria, dirt, and other substances, that may deteriorate the filled food product and shorten the expected shelf-life of the package.

The term "liquid or semi-liquid food" generally refers to food products having a flowing content that optionally may contain pieces of food. Viscous food products are included. Dairy and milk, soy, rice, grains and seed drinks, fruit juice, nectar, still drinks, energy drinks, sport drinks, coffee or tea drinks, coconut water, wine, soups, purees, jalapenos, tomatoes, sauce (such as pasta sauce), beans and olive oil are some non-limiting example of food products contemplated.

The term "aseptic" in connection with a packaging material and packaging container refers to conditions where microorganisms are eliminated, inactivated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value, such as for example its vitamin C content.

<u>Measurement Methods</u>

*Transmission Electron Microscopy (TEM) and Thickness*

Thickness measurements were performed on barrier layers by Transmission Electronic Microscopy using a Titan 80-300, FEI equipment. Samples were prepared by ultramicrotomy on an EM UC6 Microtome from Leica. Each barrier layer was embedded in an epoxy resin (EpoFix-Struers), which polymerizes in a few hours at room temperature.

Transverse cuts were made on the resin block by ultramicrotomy at room temperature, using a diamond knife (60 nm thick sections). TEM images were taken at 300kV with a contrast diaphragm (40 $\mu$m). Thickness measurements for barrier coatings were taken using DigitalMicrograph software.

*Oxygen Transmission Rate*

OTR is the amount of oxygen per surface and time unit at passing through a material at a defined temperature and relative humidity, given atmospheric pressure, and defined partial pressure of oxygen.

OTR was measured on barrier layers according to ASTM D3985-05 at 100 % oxygen atmosphere (1 atm oxygen). OTR was measured on laminates according to ASTM F1927-14 at 20 % oxygen atmosphere (0.2 atm oxygen, i.e. in air). OTR was measured on packages by an Oxtran 2/21 equipment based on coulometric sensors at 20 % oxygen, according to ASTM F1927-14 and ASTM F1307-14. ASTM F1927-14 was followed for the measuring at controlled climate conditions for both flat samples and packages. All OTR measurements were carried out at 23 °C and 50 % relative humidity (RH) climate conditions.

*Crack Onset Strain*

Crack onset strain was determined for barrier layers by measuring OTR under strain. This was done using a combination of the OTR measurement method of ASTM D3985 (discussed above) at 23 °C and 50 % RH and the method of measuring tensile properties of plastic sheeting of ASTM D882. OTR was measured while the barrier layer was under constant strain, which was increased incrementally (e.g. by 0.1 %) without relaxation between measurements. The smaller the steps, the greater the accuracy of measurements. At a certain strain value, there was a clearly noticeable OTR increase, indicated that cracks had occurred in the barrier coating occurred. This is the crack onset strain.

*Transmittance*

The optical density is measured in production by means of a densitometer, i.e. an instrument (such as from Macbeth, Tobias or similar), which uses the principle of diffuse light transmission. The instrument is suitable for measuring the optical density values of coated films. The accuracy and precision of the measurements of aluminium-coated films may be high and about +/- 0.2 OD and about +/-0.01 OD, respectively, within a measuring range from 0 to 6.60 OD.

In lab measurements, a spectrophotometer may alternatively measure the light transmission over the full visible spectrum (380-800 nm). The optical density is calculated from the light transmission (T) value at 560 nm, according to the OD formula below, and the values obtained are as accurate as and comparable to light transmission densitometer values.

Transmittance is related to optical density as follows:

$$T = 10^{-OD}$$

$$\%T = 100 \times T$$

$$OD = -\log T$$

$$OD = \text{Optical Density}$$

$$T = \text{Transmission}$$

Wherein the transmittance, T, is defined as $I_1/I_0$, where $I_1$ = transmitted light ("output") and $I_0$ = incident light ("input"). Thus, OD= $-\log_{10} (I_1/I_0)$

Transmittance values relate to final values for the barrier coating after it has stabilised in air, unless indicated otherwise. Inline transmittance values for the barrier coating during the coating process were measured in the example.

*Gelbo Flexing*

Gelbo Flexing was carried out in accordance with ASTM F392. The flexing action consists of a twisting motion combined with a horizontal motion (compression), repeatedly twisting and crushing the film.

*X-Ray Photoelectron Spectroscopy (XPS)*

XPS was conducted on the barrier layers. The apparatus used was NOVA - KRATOS, with analysis conditions as follows:

X-ray source: monochromatized Al K$\alpha$
225 Watt for both survey and elemental spectra
Analyzed area: 300 x 700 $\mu$m$^2$ at grazing detection
Detection angle: normal detection ($\theta = 0°$)
Analyzed depth: lower than 10 nm

Description of Preferred Embodiments

In the following, preferred embodiments of the invention will be described with reference to the drawings, in which:

Fig. 1 shows a schematic, cross-sectional view of a laminated packaging material of a preferred embodiment of the invention.

Fig. 2 shows a schematic view of a plant for PVD of a partially oxidised aluminium barrier coating onto a barrier substrate layer for use in the material of Fig. 1.

Fig. 3 shows a schematic view of a plant for plasma surface pre-treatment of the barrier substrate layer for use in the material of Fig. 1.

Fig. 4 shows schematically a method for manufacturing the laminated packaging material of Fig. 1.

Figs. 5a, 5b, 5c and 5d show typical examples of packaging containers produced from the laminated packaging material of Fig. 1.

Fig. 6 shows the principle of how the packaging containers of Fig. 5 are manufactured from the packaging laminate in a continuous roll-fed form, fill and seal process.

Fig. 7 shows a TEM image of the barrier coating 3a of the example.

Fig. 8 shows oxygen transmission rates for barrier layers of the example.

Fig. 9 shows oxygen transmission rates for barrier layers of the example after Gelbo flexing.

Fig. 10 shows graphs of oxygen transmission rates against strain for barrier layers of the example, indicating crack onset strain values. Fig. 10(a) shows BOPET-based barrier layers and Fig. 10(b) shows MOPET-based barrier layers.

Fig. 11 shows oxygen transmission rates for barrier layers and packaging laminates of the example.

Fig. 12 shows oxygen transmission rates for packages of the example.

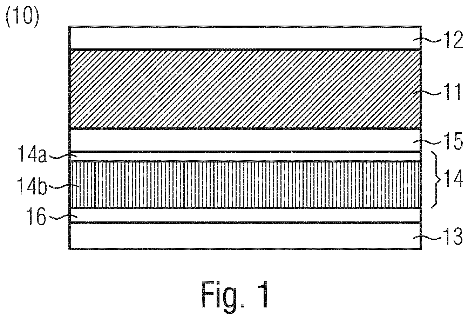

In Fig. 1, a laminated packaging material (also referred to herein as a packaging laminate) for liquid carton packaging 10a of a preferred embodiment of the invention is shown, in which the laminated material comprises a bulk layer 11 of paperboard, and an outer liquid-tight and heat-sealable layer 12 of polyolefin applied on the outside of the bulk layer 11, which side is to be directed towards the outside of a packaging container produced from the packaging laminate. The polyolefin of the outer layer 12 is a conventional low density polyethylene (LDPE) of a heat-sealable quality. An innermost liquid-tight and heat-sealable layer 13 is arranged on the opposite side of the bulk layer 11, i.e. the layer 13 will be in direct contact with the packaged product. The thus innermost heat sealable layer 13, which is to form very strong seals of a liquid packaging container made from the laminated packaging material, comprises m-LLDPE.

The bulk layer 11 is laminated to a barrier layer 14 (also referred to herein as a barrier film), formed from an oriented BOPET film barrier substrate layer 14b, coated with a PVD barrier coating 14a comprising partially oxidised aluminium. The coating 14a is applied by PVD with reactive evaporation to a thickness of about 15 nm. The form of the partially oxidised aluminium is discussed in more detail in the example below.

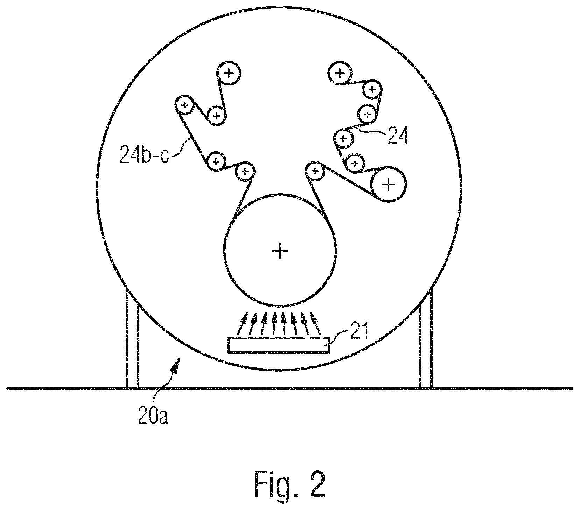

Fig. 2 is a diagrammatic view of an example of a plant 20a for PVD formation of coating 14a on polymer film barrier substrate layer 14b; 24b-c. The thin film substrate 14b; 24b-c is subjected, on the coating receiving side, to continuous evaporation deposition, such that the coated barrier layer 14 of the invention is formed. The aluminium vapour comes from a solid piece aluminium evaporation source 21. The aluminum evaporation is thermal and occurs when the aluminum wire contacts a high temperature surface including boron-nitride (heated by joule heating to 1500-1700 °C).

A limited amount of oxygen is introduced into the chamber via injection nozzles. Reactive evaporation takes place between the aluminium and oxygen.

Before the PVD coating operation is initiated, the surface of the polymer film barrier substrate layer 14b is briefly pre-treated by a plasma to functionalise and clean the surface, in order to render the surface more susceptible to the coating and create better bonding between coating and substrate.

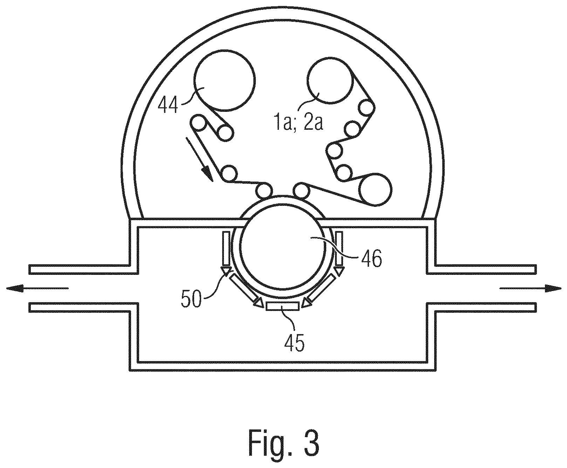

Fig. 3 is a diagrammatic view of an example of a plant for plasma surface pre-treatment of a polymer film barrier substrate layer. The film substrate 44 is subjected, on one of its surfaces, to an oxygen-argon plasma, in a plasma reaction zone 50 created in the space between magnetron electrodes 45, and a chilled film-transporting drum 46, which is also acting as an electrode, while the film is forwarded by the rotating drum, through the plasma reaction zone along the circumferential surface of the drum. The plasma is applied as a surface treatment only.

Post-treatment is also used to remove aluminium hydroxides and to oxidise the surface of the coating 14a.

Returning to the structure shown in Fig. 1, the first, outer side of the barrier layer 14 is laminated to the bulk layer 11 by an intermediate bonding layer 15 of LDPE. The innermost heat sealable layer 13 comprising m-LLDPE is adhered to the barrier layer 14 by means of a layer of LDPE 16 and optionally an adhesive polymer, such as a polyolefin having functional polar groups to enhance adhesion to adjacent layers.

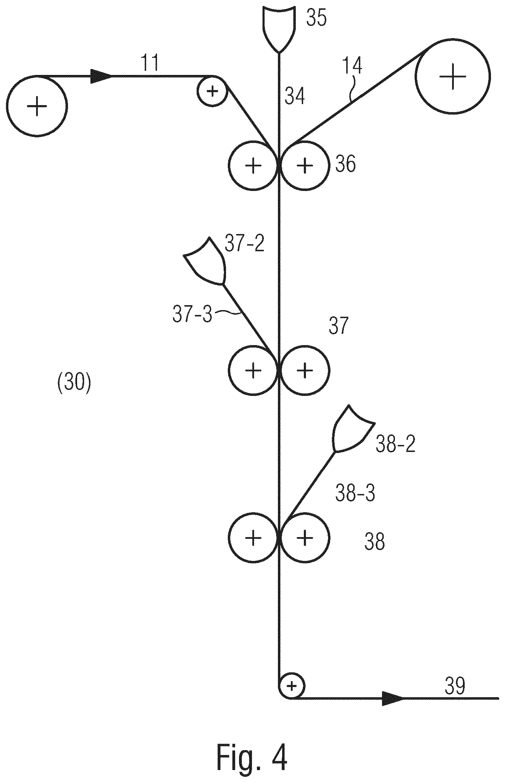

In Fig. 4, the lamination process 30 is shown for the manufacturing of the laminated packaging material 10a of Fig. 1, wherein the bulk layer 11 is laminated to the barrier layer 14 by extruding an interjacent bonding layer of LDPE 15; 34 from an extrusion station 35 and pressing together in a roller nip 36. The barrier layer 14 has a pre-applied barrier coating 14a on one side of the substrate layer as discussed above, and this side is directed towards the bulk layer 11 as shown in Fig. 1. Thus, the laminated paper bulk layer and barrier layer pass a second extruder feedblock 37-2 and a lamination nip 37, where an outermost heat-sealable layer of LDPE 12; 37-3 is coated onto the outer side of the paper layer. Further, the laminate, including the outermost heat-sealable polymer layer 12; 37-3, passes a third extruder feedblock 38-2 and a lamination nip 38, where an innermost heat sealable polymer layer 13; 38-3 is coated onto the barrier layer side of the paper-film laminate forwarded from 37. As an alternative, this latter step may advantageously be performed before lamination at 37, to protect the barrier layer 14 on the inside as soon as possible, and according to a separate alternative embodiment, the lamination at 37 of the outermost layer to the paperboard may even be performed before the lamination at 36. The finished packaging laminate 39 is finally wound onto a storage reel, not shown.

Fig. 5a shows an embodiment of a packaging container (also referred to herein as a package) 50a produced from the packaging laminate 10a according to the invention. The packaging container is particularly suitable for beverages, sauces, soups or the like. Typically, such a package has a volume of about 100 to 1000 mL. The packaging container may be of any configuration, but is preferably brick-shaped, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the half-folded packaging container is still easy to handle and dimensionally stable when put on a shelf in the food store or on a table or the like.

Fig. 5b shows an alternative, preferred example of a packaging container 50b produced from an alternative packaging laminate according to the invention. The alternative packaging laminate is thinner by having a thinner paper bulk layer, and thus it is not dimensionally stable enough to form a parallellepipedic or wedge-shaped packaging container, and is not fold-formed after transversal sealing 52b. It will thus remain a pillow-shaped pouch-like container and be distributed and sold in this form.

Fig. 5c shows a gable top package 50c, which is fold-formed from a pre-cut sheet or blank, from the laminated packaging material comprising a bulk layer of paperboard and the durable barrier layer of the invention. Alternatively, flat top packages may be formed from similar blanks of material.

Fig. 5d shows a bottle-like package 50d, which is a combination of a sleeve 54 formed from a pre-cut blanks of the laminated packaging material of the invention, and a top 55, which is formed by injection moulding plastics in combination with an opening device such as a screw cap or the like. This type of package is for example marketed under the trade names of Tetra Top® and Tetra Evero®. Those particular packages are formed by attaching the moulded top 55 with an opening device attached in a closed position, to a tubular sleeve 54 of the laminated packaging material, sterilizing the thus-formed bottle-top capsule, filling it with the food product and finally fold-forming the bottom of the package and sealing it.

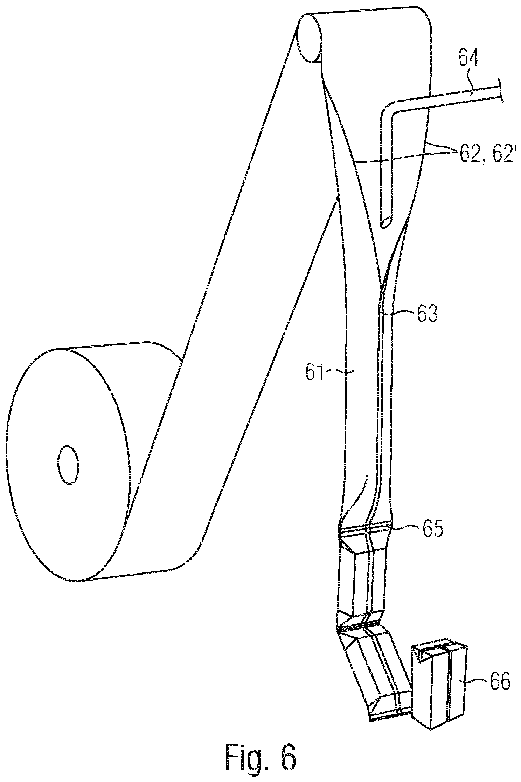

Fig. 6 shows the form-fill-seal principle as described in the introduction of the present application, i.e. a web of packaging material is formed into a tube 61 by the longitudinal edges 62 of the web being united to one another in an overlap joint 63. The tube is filled (at 64) with the intended liquid food product and is divided into individual packages by repeated transversal seals 65 of the tube at a pre-determined distance from one another below the level of the filled contents in the tube. The packages 66 are separated by incisions in the transversal seals and are given the desired geometric configuration by fold formation along prepared crease lines in the material.

Examples

A series of barrier layers 14 were produced by vapour coating of barrier substrate layers 14b. The barrier layers were included in packaging laminates, which were then formed into packages, as described below.

The barrier substrate layers were polymer films of BOPET (Mitsubishi primed film, BOPET RNK12-2DF) and MOPET (developed internally).

A plasma pre-treatment was applied to the barrier substrate layers as described in connection with Fig. 3. Direct current was used.

Barrier coatings 14a of partially oxidised aluminium were applied by PVD with reactive evaporation between aluminium and oxygen, as described in connection with Fig. 2. The film substrate web was of 1900 mm width and was coated at a reference speed of 7.8 m/s. Oxygen was injected into the evaporation zone at various flow rates to provide an atmosphere comprising evaporated oxygen and aluminium at different ratios. Test coatings were formed using lower ratios of oxygen to aluminium than the control coatings.

The amounts of oxygen and aluminium were varied as shown in Table 1 ("sccm" = standard cubic centimeter of gas volume flow):

| Substrate | Recipe Number | Control or test | Sample Number | Oxygen flow (sccm) | Al rate (g/min) | Transmittance value (%) | Thickness (nm) | Particles seen in TEM? |
|---|---|---|---|---|---|---|---|---|
| BOPET | 1a | Control | 2014-09-11-A1 | 12300 | 1.67 | 85 | 12.5±0.4 | - |
| BOPET | 2a | Test (comparative) | 2014-09-11-A2 | 10000 | 1.67 | 70 | 10.3±0.7 | - |
| BOPET | 3a | Test | 2014-09-11-A3 | 7000 | 4.2 | 15 | 22.8±1.6 | -- |
| BOPET | 4a | Test | 2014-09-11-A4 | 12000 | 4.2 | 25 | 24.7±0.6 | -- |
| MOPET | 1b | Control | 2014-09-12-A1 | 12300 | 1.67 | 85 | 13.4±0.7 | - |
| MOPET | 2b | Test | 2014-09-12-A2 | 12000 | 4.2 | 25 | 23.8±0.5 | -- |
| MOPET | 3b | Test | 2014-09-12-A3 | 25000 | 4.2 | 32 | 25.9±1.1 | - |

Table 1

The barrier layers were used to manufacture packaging laminates. The laminated structure was as shown in Fig. 1 above, and the laminates were manufactured according to the method described in Fig. 4. Thus, all laminates produced had the same general structure, were formed of the same polymers and paperboard materials except where noted, and were laminated to each other in the same way:

/LDPE (12 g/m$^2$) outermost/unbleached paperboard/ LDPE optionally with adhesive (20 g/m$^2$)/ barrier coating/ MOPET OR BOPET film substrate of 12 $\mu$m thickness / [LDPE (12 g/m$^2$)/m-LLDPE (13 g/m$^2$) OR adhesive (6 g/m$^2$)/m-LLDPE (19 g/m$^2$)]/

The laminates were formed into cuboidal packages using a TETRA PAK A3 Flex/TBA1000 packaging apparatus with ultrasonic sealing.

The barrier layers, laminates and packages were evaluated.

*TEM Images*

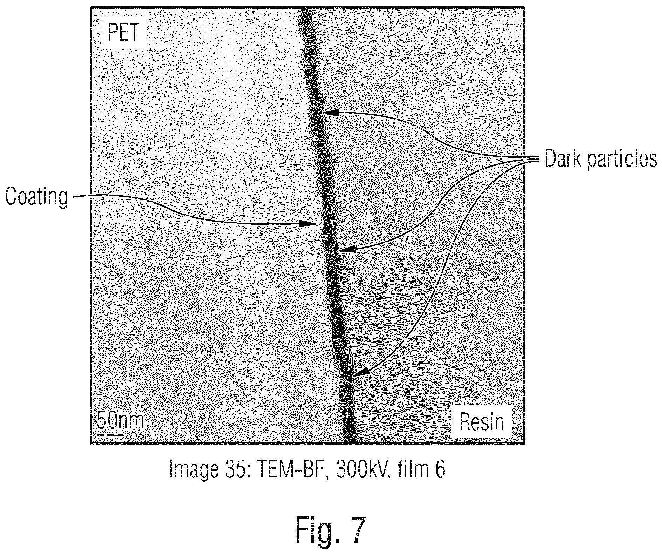

TEM images were obtained of the barrier coatings. Dark particles were visible in some but not all coatings, as shown in Table 1. Particles were seen in coatings 3a (shown in Fig. 7), 4a and 2b. For coating 3b a grain-like structure was visible in TEM. For the control coatings 1a and 1b, and coating 2a, dark particles were not seen.

Without wishing to be bound by this theory, the inventors believe that the dark particles are particles of aluminium metal dispersed in aluminium oxide, $Al_2O_3$, so that the coating is of a ceramic-metallic (cer-met) composite. It is believed that where the amount of aluminium metal is small the particles may be present but be too small to be visible by TEM.

*XPS Analysis*

XPS analysis of the three MOPET-based samples 1b, 2b, 3b indicated that the surface composition of the barrier layer coatings was $Al_2O_3$.

*Thickness*

Thicknesses of the coatings were determined by TEM and are shown in Table 1. Coating thicknesses were in the range of 10.3-28.9 nm.

*Transmittance Values of Coatings*

Transmittance values for the coatings were measured online during coating formation and are shown in Table 1.

Transmittance values increased after coating and this was thought to be due to further oxidation and stabilisation of the coating during post-treatment and afterwards in air. Increases of 5 to 7 percentages points (or up 30-40 % of initial value for low initial transmittance) were typical. The values provided in Table 1 thus increased to final, stabilised values being 5-7 percentage points higher, on each coating.

*Oxygen Transmission Rates of Barrier Layers*

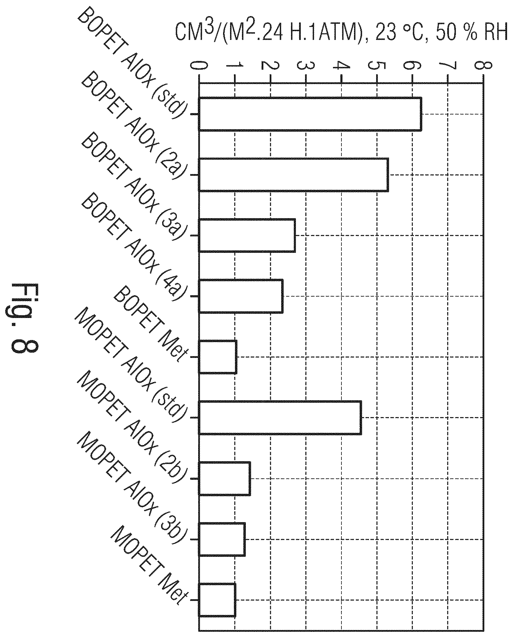

Fig. 8 shows OTR for the barrier layers at 23 °C and 50 % RH.

It can be seen that OTRs decrease as the coating is prepared with a lower oxygen ratio i.e. OTR for BOPET-based barrier layers is 1a (control, labelled "BOPET AlOx (standard)") > 2a >> 3a > 4a and for MOPET-based barrier layers is 1b (control, labelled "MOPET AlOx (standard)") > 2b > 3b. Low OTRs are desirable.

Coatings 3a, 4a, 2b and 3b provided OTRs of less than 3 $cm^3/(m^2.24 \text{ h}.1 \text{ atm})$, which is desirable. For coatings 2b and 3b (on MOPET) OTRs were less than 2 $cm^3/(m^2.24 \text{ h}.1 \text{ atm})$, which is even more desirable.

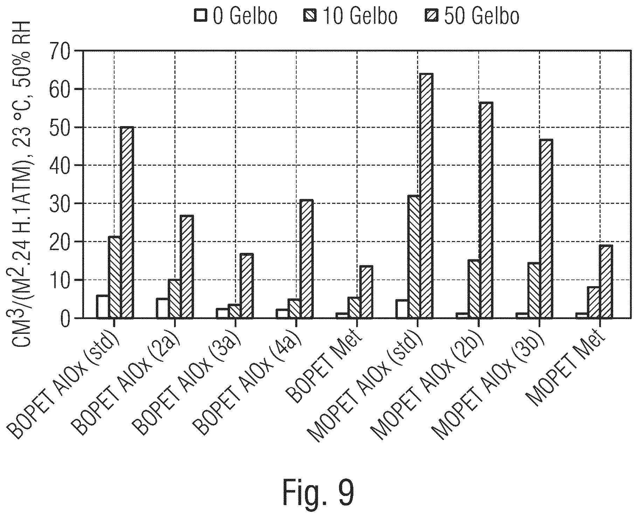

Fig. 9 shows OTR at 23 °C and 50 % RH for the barrier layers after 0, 10 and 50 cycles of Gelbo flexing. It can be seen that the good initial OTR performance of the partially oxidised aluminium coatings is maintained after Gelbo flexing. This indicates that the coatings have better mechanical properties than the control of standard AlOx, and are less brittle. Coating 4a is thicker and has less embedded aluminium (transmittance of 25% compared to 18%) which makes the coating more brittle.

*Crack Onset Strain*

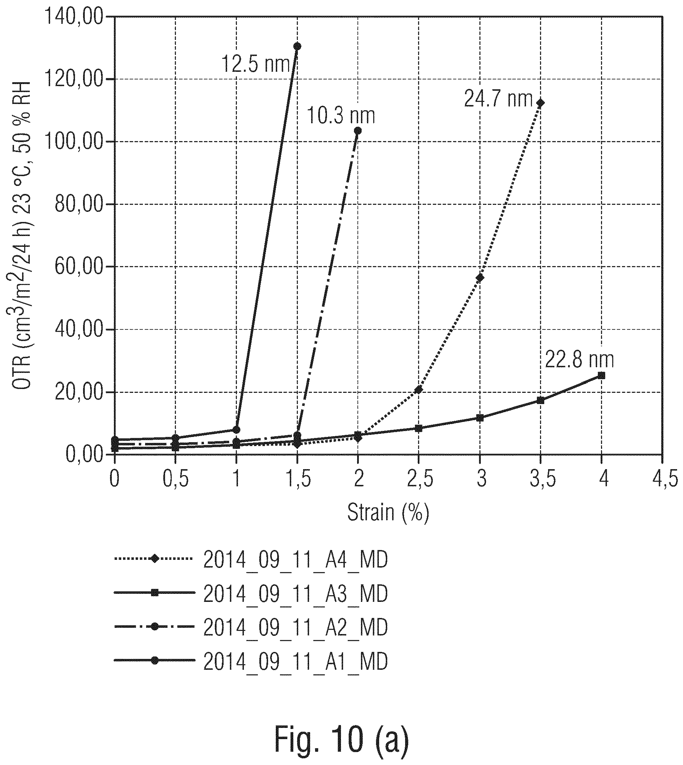

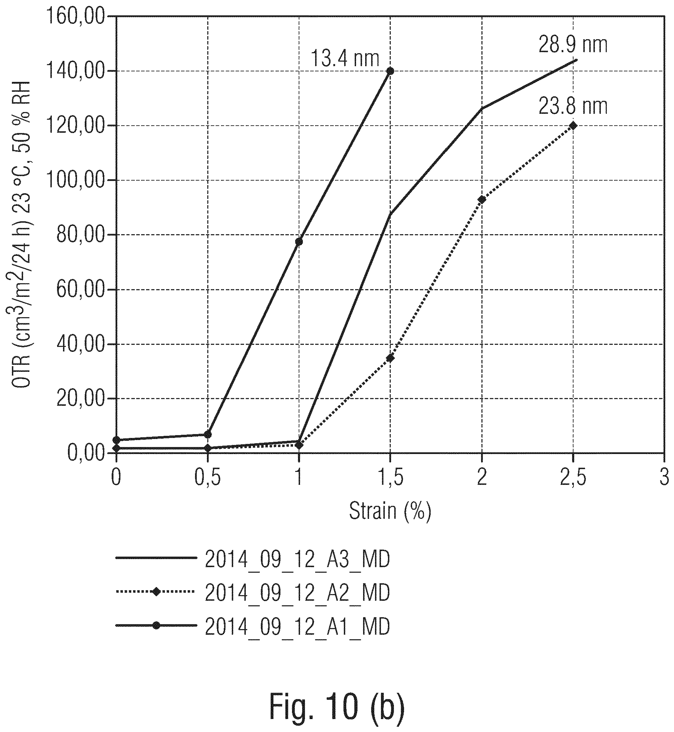

Fig. 10 shows crack onset strain for (a) BOPET-based barrier layers and (b) MOPET-based barrier layers. Crack onset strain is the strain at which OTR (at 23 °C and 50 % RH) starts to increase rapidly. A high crack onset strain indicates good mechanical properties and resistance to cracking.

Crack onset strain increases in the order 1a (control, labelled A1) < 2a (A2) < 3a (A3) < 4a (A4) for BOPET-based barrier layers. For MOPET-based films, again films 2b (A2) and 3b (A3) performed better than the control (1b/A1).

*Oxygen Transmission Rates of Laminates*

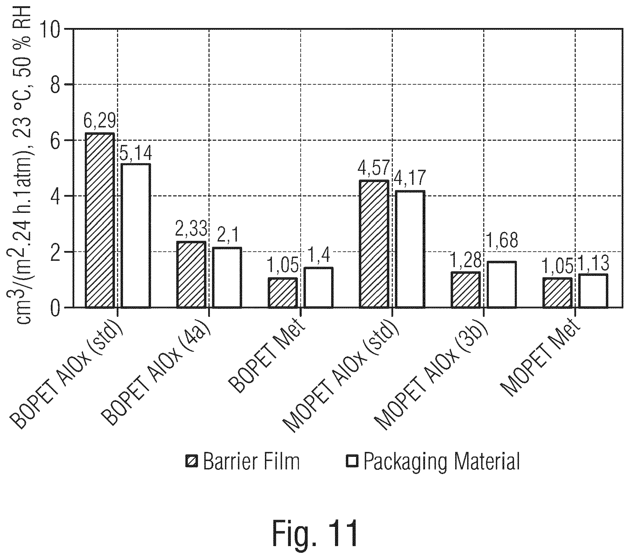

Fig. 11 shows OTR (at 23 °C and 50 % RH) for the BOPET-based laminates ("packaging materials").

Again, it can be seen that OTR decreases as the coating is prepared with a lower oxygen ratio, with OTR for the control 1a (labelled "BOPET AlOx (standard)") higher than for 4a.

It can also be seen that OTR for the 4a packaging material is similar to that for the barrier layer, indicating that the barrier layer maintains good properties even after extrusion lamination.

*Oxygen Transmission Rates of Packages*

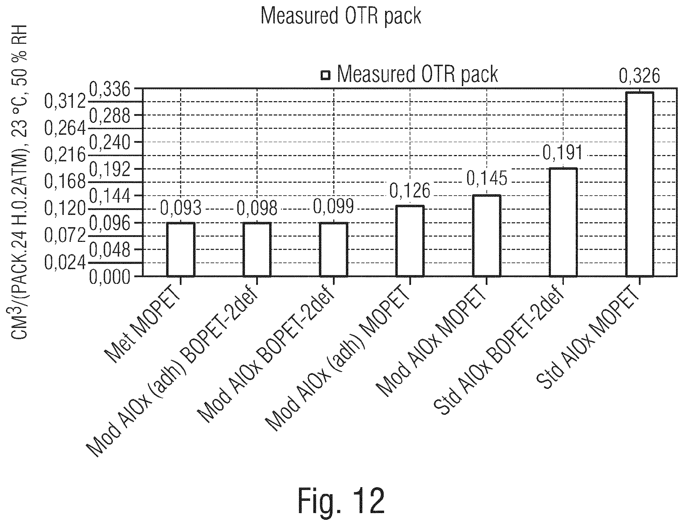

Fig. 12 shows OTR (at 23 °C and 50 % RH) for packages formed from the laminates ("packaging materials").
Again, it can be seen that OTR decreases as the coating is prepared with a lower oxygen ratio. For each of MOPET and BOPET, the standard AlOx coating gives higher OTR than the modified AlOx coating.

*Appearance*

The appearance of the test coatings was visually evaluated. The coatings were usually grey, brown, dark brown or bluish but in one case the coating was purple.
It was found that coatings with a final transmittance value of less than 20 % had a metallic appearance. Coatings with a higher transmittance value than 20 % did not have a metallic appearance after lamination, particularly when unbleached board was used.
Without wishing to be bound by theory, the inventors believe that the appearance of the coatings is dependent on both the thickness of the coating and the size of the aluminium particles.

*Conclusions of Example*

The coatings of the examples had various advantages.

- The coatings were non-metallic in appearance, especially after lamination, and could thus be visually distinguished from metal and metallised films. This may be important in meeting market needs. For example, the Japanese market requires barrier layers which are non-metallic in appearance to enable package recycling.

- The coatings provided effective barrier properties as shown by OTRs. The good OTRs were maintained when the barrier layers were converted to form laminates (including extrusion coating) and when the laminates were formed into packages. The good OTRs were also maintained after a Gelbo flex test. Crack onset strain was high. Thus, the coatings showed better mechanical properties than conventional AlOx coatings, which tend to be brittle. Again without wishing to be bound by theory, the inventors believe that the cer-mat structure with its aluminium particles contributes to the good mechanical properties of the test coatings by reducing brittleness. The coatings are promising as a barrier layer for use in liquid packaging laminates (including those for long-term aseptic, ambient storage), where crack resistance is very important. The low thickness of the coatings contributes to the good mechanical properties: thicker coatings used in the prior art e.g. the coating of EP437946 (thickness around 5-7 times that of the example) would be likely to be more brittle.

- The coatings could be applied at a higher coating speed than PECVD coatings using standard PVD equipment. Again, low coating thickness allows for higher coating speed. These coatings thus offer a low-cost, scaleable option.

- The coatings use a low amount of metal compared with conventional aluminium foil, which also enables easier recycling of the laminated material, and generates less carbon dioxide in the manufacturing process. In addition, the PE used in the various layers may be bio-based. Therefore, the laminate of the examples has sustainability advantages.

- The coatings may be microwaveable.

As a final remark, the invention is not limited by the embodiments shown and described above, but may be varied within the scope of the claims.

**Claims**

1. A laminated packaging material (10a) for packaging of liquid or semi-liquid food products, comprising:

    - a bulk layer (11) comprising cellulose-based material, preferably paper or paperboard,
    - a first outermost liquid-tight, heat-sealable thermoplastic layer (12), arranged on the outside of the bulk layer to constitute the outside of a package formed from the packaging material,
- a second innermost liquid-tight, heat-sealable thermoplastic layer (13) arranged on the inside of the bulk layer to be in direct contact with the filled food product, and
- a barrier layer (14) comprising a barrier substrate layer (14b) coated with a physical vapour deposited (PVD) barrier coating comprising partially oxidised aluminium, the barrier coating having a thickness of 8 to 40 nm and a transmittance of 20 to 60 %, as measured by a spectrophotometer at wavelengths over the visible spectrum and after stabilisation of the coating in air, the barrier layer being laminated between the bulk layer and the second, innermost liquid-tight, heat-sealable thermoplastic layer.

2. A laminated packaging material as claimed in Claim 1, wherein the partially oxidised aluminium comprises a ceramic-metallic composite of aluminium particles and $Al_2O_3$.

3. A laminated packaging material as claimed in Claim 1 or Claim 2, wherein the barrier coating has a non-metallic appearance.

4. A laminated packaging material as claimed in any one of the preceding claims, wherein the barrier substrate layer comprises a polymer film or a cellulose-based material.

5. A laminated packaging material as claimed in Claim 4, wherein the polymer film is a polyolefin film or a polyester film.

6. A laminated packaging material as claimed in Claim 5, wherein the polymer film is a pre-manufactured mono-axially or biaxially oriented film.

7. A laminated packaging material as claimed in Claim 6, wherein the polymer film is a mono-axially orientated polyethylene terephthalate (MOPET) film or a biaxially orientated polyethylene terephthalate (BOPET) film.

8. A laminated packaging material as claimed in Claim 4, wherein the barrier substrate layer is a paper layer.

9. A laminated packaging material as claimed in any one of the preceding claims, wherein the surface of the barrier substrate layer to be PVD coated has been pre-treated by in-line plasma pre-treatment and/or corona, flame or atmospheric plasma during film manufacturing.

10. A laminated packaging material as claimed in any one of the preceding claims, wherein the barrier coating has been post-treated by plasma treatment.

11. A laminated packaging material as claimed in any one of the preceding claims, wherein the PVD barrier coating has been applied by plasma-assisted reactive evaporation.

12. A method of manufacturing the laminated packaging material as claimed in any one of Claims 1-11, comprising the steps, in any order, of

- laminating the barrier layer to the inner side of the bulk layer (11),
- applying the first outermost liquid-tight, heat-sealable thermoplastic layer (12) onto the outer side of the bulk layer, and applying the second innermost liquid-tight, heat-sealable thermoplastic layer (13) on the inner side of the barrier layer (14).

13. A method as claimed in Claim 12, wherein the barrier layer is laminated to the bulk layer by melt (co-)extruding (35) an interjacent laminating layer (15) of a thermoplastic polymer between the bulk layer and the barrier layer, and subsequently applying pressure in a lamination roller nip.

14. A packaging container for liquid or semi-liquid food products (50a; 50b; 50c; 50d), comprising the laminated packaging material (10a) as defined in any one of Claims 1-11.

15. A method of forming a packaging container (50a; 50b; 50c; 50d) as claimed in Claim 14, comprising a step of folding the laminated packaging material (10a).

**Patentansprüche**

1.  Laminiertes Verpackungsmaterial (10a) zum Verpacken von flüssigen oder halbflüssigen Lebensmittelprodukten, umfassend:

    - eine Volumenschicht (11) umfassend Material auf Cellulosebasis, vorzugsweise Papier oder Pappe,
    - eine erste, äußerste flüssigkeitsdichte heißsiegelfähige thermoplastische Schicht (12), die an der Außenseite der Volumenschicht angeordnet ist, um die Außenseite einer aus dem Verpackungsmaterial gebildeten Verpackung zu bilden;
    - eine zweite, innerste flüssigkeitsdichte heißsiegelfähige thermoplastische Schicht (13), die an der Innenseite der Volumenschicht angeordnet ist, um sich in direktem Kontakt mit dem eingefüllten Lebensmittelprodukt zu befinden, und
    - eine Barriereschicht (14) umfassend eine Barrieresubstratschicht (14b), die mit einer durch Gasphasenabscheidung (PVD) abgeschiedenen Barriereschicht, die teilweise oxidiertes Aluminium umfasst, beschichtet ist, wobei die Barriereschicht eine Dicke von 8 bis 40 nm und eine Transmission von 20 bis 60 %, gemessen mit einem Spektralphotometer bei Wellenlängen über dem sichtbaren Spektrum und nach Stabilisierung der Beschichtung an Luft, aufweist, wobei die Barriereschicht zwischen die Volumenschicht und die zweite, innerste flüssigkeitsdichte heißsiegelfähige thermoplastische Schicht laminiert ist.

2.  Laminiertes Verpackungsmaterial nach Anspruch 1, wobei das teilweise oxidierte Aluminium einen keramischmetallischen Verbundstoff aus Aluminiumpartikeln und $Al_2O_3$ umfasst.

3.  Laminiertes Verpackungsmaterial nach Anspruch 1 oder Anspruch 2, wobei die Barrierebeschichtung ein nichtmetallisches Aussehen aufweist.

4.  Laminiertes Verpackungsmaterial nach einem der vorstehenden Ansprüche, wobei die Barrieresubstratschicht eine Polymerfolie oder ein Material auf Cellulosebasis umfasst.

5.  Laminiertes Verpackungsmaterial nach Anspruch 4, wobei die Polymerfolie eine Polyolefinfolie oder eine Polyesterfolie ist.

6.  Laminiertes Verpackungsmaterial nach Anspruch 5, wobei die Polymerfolie eine vorgefertigte monoaxial oder biaxial orientierte Folie ist.

7.  Laminiertes Verpackungsmaterial nach Anspruch 6, wobei die Polymerfolie eine monoaxial orientierte Polyethylenterephthalat(MOPET)-Folie oder eine biaxial orientierte Polyethylenterephthalat(BOPET)-Folie ist.

8.  Laminiertes Verpackungsmaterial nach Anspruch 4, wobei die Barrieresubstratschicht eine Papierschicht ist.

9.  Laminiertes Verpackungsmaterial nach einem der vorstehenden Ansprüche, wobei die Oberfläche der Barrieresubstratschicht, die PVD-beschichtet werden soll, während der Folienherstellung durch Inline-Plasmavorbehandlung und/oder Korona-, Flammen- oder Atmosphärenplasma vorbehandelt worden ist.

10. Laminiertes Verpackungsmaterial nach einem der vorstehenden Ansprüche, wobei die Barrierebeschichtung durch Plasmabehandlung nachbehandelt worden ist.

11. Laminiertes Verpackungsmaterial nach einem der vorstehenden Ansprüche, wobei die PVD-Barrierebeschichtung durch plasmaunterstützte reaktive Verdampfung aufgebracht worden ist.

12. Verfahren zur Herstellung des laminierten Verpackungsmaterials nach einem der Ansprüche 1-11, umfassend die Schritte in beliebiger Reihenfolge von

    - Laminieren der Barriereschicht an die Innenseite der Volumenschicht (11),
    - Aufbringen der ersten, äußersten flüssigkeitsdichten heißsiegelfähigen thermoplastischen Schicht (12) auf die Außenseite der Volumenschicht und Aufbringen der zweiten, innersten flüssigkeitsdichten, heißsiegelfähigen thermoplastischen Schicht (13) auf die Innenseite der Barriereschicht (14).

13. Verfahren nach Anspruch 12, wobei die Barriereschicht auf die Volumenschicht laminiert wird, indem eine dazwischenliegende Laminierschicht (15) aus einem thermoplastischen Polymer zwischen die Volumenschicht und die Barriereschicht schmelz(co)extrudiert wird (35) und anschließend Druck in einem Laminierwalzenspalt ausgeübt wird.

14. Verpackungsbehälter für flüssige oder halbflüssige Lebensmittelprodukte (50a; 50b; 50c; 50d), umfassend das laminierte Verpackungsmaterial (10a) nach einem der Ansprüche 1-11.

15. Verfahren zur Herstellung eines Verpackungsbehälters (50a; 50b; 50c; 50d) nach Anspruch 14, umfassend einen Schritt des Faltens des laminierten Verpackungsmaterials (10a).

**Revendications**

1. Matériau d'emballage stratifié (10a) pour l'emballage de produits alimentaires liquides ou semi-liquides, comprenant :

   - une couche de masse (11) comprenant un matériau à base de cellulose, de préférence du papier ou du carton,
   - une première couche thermoplastique étanche aux liquides et thermoscellable la plus à l'extérieur (12), disposée sur l'extérieur de la couche de masse pour constituer l'extérieur d'un emballage formé à partir du matériau d'emballage,
   - une deuxième couche thermoplastique étanche aux liquides, thermoscellable (13) la plus à l'intérieur, disposée à l'intérieur de la couche de masse de manière à être en contact direct avec le produit alimentaire rempli, et
   - une couche barrière (14) comprenant une couche substrat barrière (14b) revêtue d'une couche barrière déposée physiquement en phase vapeur (PVD) comprenant de l'aluminium partiellement oxydé, la couche barrière ayant une épaisseur de 8 à 40 nm et une transmittance de 20 à 60 %, mesurée par un spectrophotomètre aux longueurs d'onde du spectre visible et après stabilisation du revêtement dans l'air, la couche barrière étant stratifiée entre la couche de masse et la seconde couche thermoplastique étanche aux liquides, la plus à l'intérieur, thermoscellable.

2. Matériau d'emballage stratifié selon la revendication 1, dans lequel l'aluminium partiellement oxydé comprend un composite céramique-métallique de particules d'aluminium et de $Al_2O_3$.

3. Matériau d'emballage stratifié selon la revendication 1 ou la revendication 2, dans lequel le revêtement barrière a une apparence non métallique.

4. Matériau d'emballage stratifié selon l'une quelconque des revendications précédentes, dans lequel la couche de substrat barrière comprend un film de polymère ou un matériau à base de cellulose.

5. Matériau d'emballage stratifié selon la revendication 4, dans lequel le film de polymère est un film de polyoléfine ou un film de polyester.

6. Matériau d'emballage stratifié selon la revendication 5, dans lequel le film de polymère est un film pré-fabriqué orienté mono- ou biaxialement.

7. Matériau d'emballage stratifié selon la revendication 6, dans lequel le film de polymère est un film de poly(téréphtalate d'éthylène) à orientation monoaxiale (MOPET) ou un film de poly(téréphtalate d'éthylène) à orientation biaxiale (BOPET).

8. Matériau d'emballage stratifié selon la revendication 4, dans lequel la couche de substrat barrière est une couche de papier.

9. Matériau d'emballage stratifié selon l'une quelconque des revendications précédentes, dans lequel la surface de la couche de substrat barrière devant être revêtue par PVD a été prétraitée par un prétraitement par plasma en ligne et/ou par corona, à la flamme ou par plasma atmosphérique pendant la fabrication du film.

10. Matériau d'emballage stratifié selon l'une quelconque des revendications précédentes, dans lequel le revêtement barrière a été post-traité par traitement par plasma.

11. Matériau d'emballage stratifié selon l'une quelconque des revendications précédentes, dans lequel le revêtement barrière PVD a été appliqué par évaporation réactive assistée par plasma.

12. Procédé de fabrication du matériau d'emballage stratifié selon l'une quelconque des revendications 1 à 11, comprenant les étapes, dans n'importe quel ordre, de

   - stratification de la couche barrière sur la face interne de la couche de masse (11),
   - application de la première couche thermoplastique étanche aux liquides et thermoscellable la plus à l'extérieur (12) sur le côté extérieur de la couche de masse, et application de la seconde couche thermoplastique étanche aux liquides et thermoscellable la plus à l'intérieur (13) sur le côté intérieur de la couche barrière (14).

13. Procédé selon la revendication 12, dans lequel la couche barrière est stratifiée sur la couche de masse par (co-) extrusion à l'état fondu (35) d'une couche de stratification interjacente (15) d'un polymère thermoplastique entre la couche de masse et la couche barrière, puis application d'une pression dans un interstice de rouleau de stratification.

14. Récipient d'emballage pour produits alimentaires liquides ou semi-liquides (50a ; 50b ; 50c ; 50d), comprenant le matériau d'emballage stratifié (10a) tel que défini dans l'une quelconque des revendications 1 à 11.

15. Procédé de formation d'un récipient d'emballage (50a ; 50b ; 50c ; 50d) selon la revendication 14, comprenant une étape de pliage du matériau d'emballage stratifié (10a).

(10)

Fig. 1

Fig. 2

Fig. 3

Fig. 4

Fig. 5a

Fig. 5b

(50c)

Fig. 5c

Fig. 5d

Fig. 6

Image 35: TEM-BF, 300kV, film 6

## Fig. 7

Fig. 8

Fig. 9

Fig. 10 (a)

Fig. 10 (b)

Fig. 11

Fig. 12

**REFERENCES CITED IN THE DESCRIPTION**

**Patent documents cited in the description**

- WO 2009112255 A
- EP 437946 A
- EP 3517291 A
- WO 2022117462 A
- US 8048532 B2
- US 10569515 B2
- WO 2020155795 A1